**Europäisches Patentamt**

**European Patent Office**

**Office européen des brevets**

(11) Veröffentlichungsnummer : **0 355 633 B1**

(12) **EUROPÄISCHE PATENTSCHRIFT**

(45) Veröffentlichungstag der Patentschrift :
**20.05.92 Patentblatt 92/21**

(21) Anmeldenummer : **89114937.9**

(22) Anmeldetag : **11.08.89**

(51) Int. Cl.$^5$ : **B23H 1/10**, B01D 61/14

(54) Vorrichtung zum Aufbereiten der Bearbeitungsflüssigkeit einer Elektroerosionsmaschine.

(30) Priorität : **19.08.88 DE 3828237**

(43) Veröffentlichungstag der Anmeldung :
**28.02.90 Patentblatt 90/09**

(45) Bekanntmachung des Hinweises auf die
Patenterteilung :
**20.05.92 Patentblatt 92/21**

(84) Benannte Vertragsstaaten :
**CH DE FR GB IT LI LU SE**

(56) Entgegenhaltungen :
**DE-A- 3 727 275**

(73) Patentinhaber : **AG für industrielle Elektronik
AGIE Losone bei Locarno
CH-6616 Losone/Locarno (CH)**

(72) Erfinder : **Budin, Josef
Via Cadogno 3
CH-6648 Minusio (CH)**
Erfinder : **Kutil, Hugo
Zypressenstrasse 17
CH-8408 Winterthur (CH)**
Erfinder : **Levy, Gideon, Dr.
Via Locarno 52
CH-6616 Losone (CH)**

(74) Vertreter : **EGLI-EUROPEAN PATENT
ATTORNEYS
Widenmayerstrasse 5
W-8000 München 22 (DE)**

## Beschreibung

Die vorliegende Erfindung betrifft eine Vorrichtung zum Aufbereiten der Bearbeitungsflüssigkeit einer Elektroerosionsmaschine nach dem Oberbegriff des Patentanspruchs 1.

Elektroerosionsmaschinen haben einen mit einer Bearbeitungsflüssigkeit gefüllten Arbeitsbehälter, in dem ein mittels einer Elektroerosion zu bearbeitendes Werkstück eingetaucht ist. Die Bearbeitungsflüssigkeit besteht bei sogenannten Drahtschneidemaschinen oder Drahterosionsmaschinen aus deionisiertem Wasser, während sie bei Senkmaschinen aus Kohlenwasserstoffen besteht. Durch das erosive Abtragen von Partikeln aus dem Werkstück vermindert sich die Reinheit der Bearbeitungsflüssigkeit, wodurch sich auch deren elektrische Leitfähigkeit ändert. Um eine gewünschte Qualität der Erosionsbearbeitung aufrechtzuerhalten, ist es nötig, die Bearbeitungsflüssigkeit zu reinigen, um deren elektrische Eigenschaften und deren Reinheit in vorbestimmten Bereichen zu halten.

Allgemein werden im Stand der Technik zur Aufbereitung der Bearbeitungsflüssigkeit konventionelle Filter eingesetzt, die einen vergleichsweise großen Porendurchmesser haben. Bei großen Porenabmessungen derartiger konventioneller Filter ist die Filterwirkung nicht ausreichend, um die Qualität der Bearbeitungsflüssigkeit einer Elektroerosionsmaschine über eine Zeitdauer von mehreren Tagen in einem gewünschten Qualitätsbereich zu halten. Ein Herabsetzen der Porendurchmesser der konventionellen Filter zur Steigerung der Filtrationsqualität führt andererseits zu einem Zusetzen der Filterwandungen.

Aus der Druckschrift DE 3727275 A1 ist eine Vorrichtung der eingangs genannten Art bekannt. Bei dieser Vorrichtung wird die Bearbeitungsflüssigkeit in einem Kreislauf von einem Absetztank mittels einer Pumpe durch ein eine Filtermembran aufweisendes Querstromfilter und von diesem zurück in den Absetztank geführt. Die gereinigte Bearbeitungsflüssigkeit, also der Permeat, gelangt in einen Saubertank, von dem aus er über eine weitere Pumpe dem Arbeitsbereich einer Funkenerosionsmaschine zugeführt wird. In dieser Druckschrift ist auch darauf hingewiesen, daß das Querstromfilter durch Rückspülung gereinigt werden kann, indem von der Austrittsseite des Permeats her unter Druck Permeat in das Querstromfilter eingebracht wird, wodurch die Poren der Filtermembran gereinigt werden können. Aus den Poren herausgedrücktes Partikelmaterial gelangt dann erneut in den Konzentratstrom. Bei dieser bekannten Vorrichtung besteht die Gefahr, daß die Poren des Querstromfilters schnell zugesetzt werden, so daß der Filtrierwinkungsgrad gering ist. Auch wenn durch eine Rückspülung die Poren der Filtermembran immer wieder gereinigt werden, so steht während dieses Reinigungsvorganges das Querstromfilter nicht zur Reinigung der Bearbeitungsflüssigkeit zur Verfügung, wodurch der Filtrierwirkungsgrad nachteilig beeinträchtigt wird.

Bei der Aufbereitung von Bearbeitungsflüssigkeit bei Elektroerosionsmaschinen werden Membranfilter auch für andere Zwecke eingesetzt. So ist beispielsweise aus der JP-OS 62-24917 eine Vorrichtung zum Aufbereiten der Bearbeitungsflüssigkeit einer Elektroerosionsmaschine bekannt, bei der ein Membranfilter eingesetzt wird. Die bekannte Vorrichtung umfaßt einen Behälter für die Bearbeitungsflüssigkeit, der durch eine aus Cellophan bestehende Membran in zwei Bereiche unterteilt ist. Ein erster Bereich steht über eine Pumpe, der ein konventioneller Filter nachgeschaltet ist, mit dem Arbeitsbereich der Elektroerosionsmaschine in Verbindung, der mittels einer weiteren Pumpe wieder in diesen ersten Bereich des Behälters entleerbar ist. Der zweite Bereich des Behälters ist über eine weitere Pumpe an einen Ionentauscher angeschlossen. Die Ionenkonzentration in dem zweiten Behälterbereich liegt um Größenordnungen unter der Ionenkonzentration im ersten Behälterbereich, so daß der Ionentauscher mit einer für sein Betriebsverhalten günstigen, niedrigen Ionendichte betrieben werden kann. Bei dieser bekannten Vorrichtung zum Aufbereiten der Bearbeitungsflüssigkeit dient zum Filtern des Konzentrates also ein konventioneller Filter, während ein Membranfilter lediglich zur einstellbaren Reduktion der Ionendichte für einen Kreislauf eines Ionentauschers eingesetzt wird.

Gegenüber diesem Stand der Technik liegt der vorliegenden Erfindung die Aufgabe zugrunde, eine Vorrichtung zum Aufbearbeiten der Bearbeitungsflüssigkeit einer Elektroerosionsmaschine so weiterzubilden, daß eine hohe Qualität der Bearbeitungsflüssigkeit für die Elektroerosionsbearbeitung über eine lange Zeitdauer aufrechterhalten werden kann.

Diese Aufgabe wird bei einer Vorrichtung der im Oberbegriff des Patentanspruchs 1 genannten Art durch die im kennzeichnenden Teil des Patentanspruchs 1 genannten Merkmale gelöst.

Der vorliegenden Erfindung liegt die Erkenntnis zugrunde, daß für die Reinigung des Konzentrates ein Membranfilter eingesetzt werden kann, wenn zumindest ein Teil des vom Konzentratbecken entnommenen Konzentratstromes zu einem Entsorgungsbehälter mit einem Vliesfilter geführt wird, durch das der Teilstrom des Konzentrates durch Ausfilterung von Feststoffen vorgereinigt wird, bevor der vorgereinigte Teilstrom erneut dem Konzentratbecken zugeführt wird. Durch die erfindungsgemäße Kombination des Membranfilters mit einer durch das Vliesfilter bewirkten Teilentsorgung des Konzentratbeckens ist es möglich, in dem Konzentratbecken eine derart geringe Feststoffkonzentration aufrechtzuerhalten, daß das Membranfilter zur Abreinigung des Konzentrates verwendet werden kann, ohne daß die befürchtete Zusetzung des Membranfilters eintritt.

Die Reinigung der Flüssigkeit wird also prinzipiell durch das Membranfilter bewirkt, während das Vliesfilter der Entsorgung der Schmutzpartikel aus dem Flüssigkeitskreislauf dient.

Ein erheblicher Vorteil der erfindungsgemäßen Kombination des Membranfilters und des Vliesfilters besteht darin, daß sich die Feststoffe aus dem Konzentrat oberhalb des Vliesfilters zu einem Filterkuchen akkumulieren, der zu einer weiteren Erhöhung der Filterwirkung des Vliesfilters gegenüber Feststoffen im Konzentrat führt.

Besondere Bedeutung kommt der Tatsache zu, daß die an dem Vliesfilter zu einem Filterkuchen akkumulierten Feststoffe nur noch einen vergleichsweise geringen Feuchtigkeitsgehalt haben oder gar in einer praktisch trockenen Form voriiegen, so daß eine einfache Entsorgung dieser Feststoffe zusammen mit dem Flitervlies vorgenommen werden kann.

Von besonderem Vorteil ist es, wenn die Entsorgung des Schmutzkreislaufes diskontinuierlich durchgeführt wird, und zwar dann, wenn eine Rückspülung des Membranfilters vorgenommen wird. Die Frequenz des Rückspülens bzw. der Zeitpunkt kann indirekt aus Parametern des Elektroerosionsprozesses bestimmt werden, insbesondere aus dem zeitlichen Integral des Brennstromes der Elektroerosionsmaschine, da bei konstanter Brennspannung die Abtragsleistung und damit auch der Anfall von Schmutzpartikeln von der elektrischen Leistung, die im Arbeitsspalt verbraucht wurde, abhängt.

Steuert man in Abhängigkeit von diesen Parametern auch eine Reinigung des Membranfilters, die einzeln oder in Kombination durch ein Rückspülen des Membranfilters und durch eine Strömungsumkehr des Konzentratstromes durch das Membranfiter erreicht wird, so ist es besonders günstig, den Teilstrom zu dem Entsorgungsbehälter dann zu vergrößern, wenn kurz vorher eine solche Reinigung des Membranfilters eingeleitet wurde, da dann die Feststoffkonzentration im Konzentratkreislauf besonders hoch ist.

Bevorzugte Weiterbildungen und Ausgestaltungen der erfindungsgemäßen Vorrichtung zum Aufbereiten der Bearbeitungsfiüssigkeit einer Elektroerosionsmaschine sind Gegenstand der Unteransprüche.

Bevorzugte Ausführungsformen der vorliegenden Erfindung werden nachfolgend unter Bezugnahme auf die beiliegenden Zeichnungen näher erläutert. Es zeigen:

Fig. 1 eine schematische Teildarstellung desjenigen Bereiches innerhalb einer Vorrichtung zum Aufbereiten der Bearbeitungsflüssigkeit einer Elektroerosionsmaschine, der die Aufbereitung des Konzentrates betrifft;

Fig. 2 eine Schnittdarstellung durch einen Membranfilter, wie er bei einer Vorrichtung gemäß Fig. 1 zum Einsatz kommt; und

Fig. 3 eine Gesamtdarstellung einer Vorrichtung zum Aufbereiten der Bearbeitungsflüssigkeit einer Elektroerosionsmaschine gemäß der vorliegenden Erfindung.

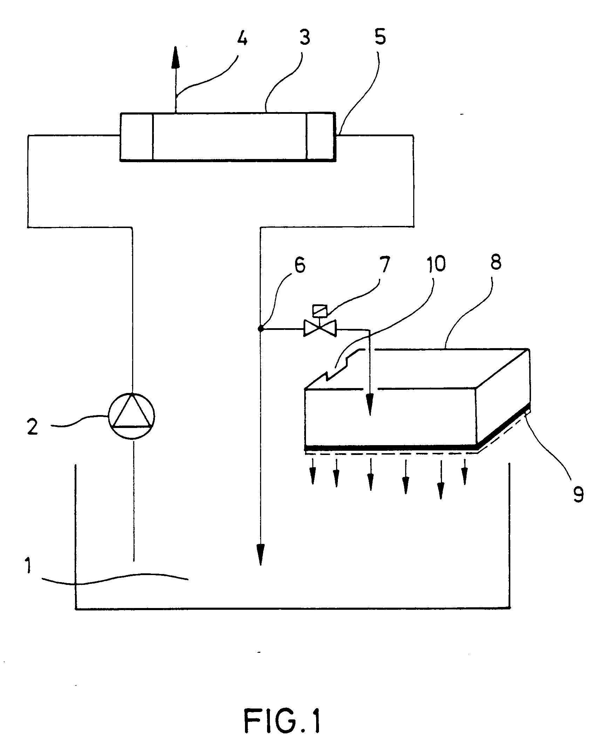

Wie nachfolgend noch näher erläutert werden wird, beinhaltet eine Vorrichtung zum Aufbereiten der Bearbeitungs flüssigkeit einer Erosionsmaschine ein Konzentratbecken 1, das schemenhaft in Fig. 1 dargestellt ist. Von dem Konzentratbecken wird mittels einer Pumpe 2 ein Konzentratstrom zu einem Membranfilter 3 gefördert, von dem ein Permeat an einem Permeatausgang 4 abgeleitet wird. Von einem Konzentratausgang 5 wird der nach der Abzweigung des Permeates mit Feststoffen weiter angereicherte Konzentratstrom zu dem Konzentratbecken 1 zurückgeleitet. Ein Teilstrom des rückgeleiteten Konzentratstromes wird hinter einer Verzweigung 6 durch ein elektrisch betätigbares Teilstromventil 7 zu einem Entsorgungsbehälter 8 zugeführt. Der Entsorgungsbehälter 8 ist als Siebkorb ausgeführt, in den ein Vliesfilter eingelegt ist. Dieses Vliesfilter kann ein Vliesfiltersack oder eine Vliesfiltermatte sein, die den Boden eines nur an seiner Unterseite siebförmig ausgestalteten Entsorgungsbehälters bedeckt. Der Entsorgungsbehälter 8 ist oberhalb des Konzentratbeckens 1 angeordnet, so daß der Teilstrom des Konzentrates, der den Vliesfiltersack 9 des Entsorgungsbehälters 8 durchlaufen hat, in das Konzentratbekken 1 zurückgeführt wird. Im Laufe des Filterbetriebes baut sich oberhalb der Oberfläche des Vliesfiltersackes 9 ein Filterkuchen auf, der aus den akkumulierten Feststoffen besteht, die aus dem Konzentrat abgeschieden werden. Dieser Filterkuchen bewirkt eine Verstärkung der Filterwirkung des Vliesfiltersackes 9.

Der Entsorgungsbehälter 8 ist nach einer Variante der Erfindung mit einem Überlauf 10 versehen, der ein Überströmen des Konzentrates von dem Entsorgungsbehälter 8 in das Konzentratbecken 1 gestattet, wenn der dem Entsorgungsbehälter 8 zugeführte Konzentratteilstrom größer ist als die vorgereinigte Konzentratmenge, die den Filterkuchen und den Vliesfiltersack 9 durchsickert.

Durch Steuerung des Teilstromventils 7 läßt sich die Teilstrommenge verändern so daß dem Entsorgungsbehälter 8 entweder periodisch oder diskontinuierlich unterschiedlich große Teilstrommengen pro Zeiteinheit zugeleitet werden.

In der Praxis werden dem Entsorgungsbehälter 8 kontinuierlich kleinere Teilstrommengen zugeführt. Bevorzugt ist eine diskontinuierliche Vergrößerung des Teilstromes zu dem Entsorgungsbehälter, was vorteilhafterweise immer dann geschieht, wenn die Konzentration der Verunreinigungen einen vorgegebenen Wert erreicht hat, was primär indirekt aus Parametern der Elektroerosion, insbesondere dem zeitlichen Integral des Brennstromes ermittelt wird. Da in Abhängigkeit dieser Parameter ein Rückspülen des Membranfilters vorgenommen wird, kann man die Vergrößerung der Teilstrommenge zum Entsorgungsbehälter auch unmittelbar in Abhängigkeit von dem Rückspülvorgang einleiten, da durch ein kurzzeitiges Rückspülen des Membranfilters, Schmutzpartikel von der Membranfilterwand abgedrückt und vom Konzentratstrom mitgeführt werden, so daß in dieser Phase eine erhöhte Schmutzpartikelkonzentration vorliegt.. Auch erzielt man eine Reinigungswirkung dadurch, daß die Strömungsrichtung des Konzentratstromes durch das Membranfilter in bestimmten Zeitintervallen umgeschaltet wird, da sich besonders am Eingang des Membranfilters bevorzugt Schmutzpartikeln zusammen. Bei einer Strömungsumkehr wird dann der bisherige Eingang zum Ausgang des Membranfilters, so daß die sich dort angelagerten Partikel vom Konzentratstrom mitgerissen werden. Gerade in diesen "Reinigungsphasen" ist die Konzentration der Schmutzpartikel besonders hoch, so daß es sinnvoll ist, dann den Teilstrom zum Vliesfilter mengenmäßig zu erhöhen.

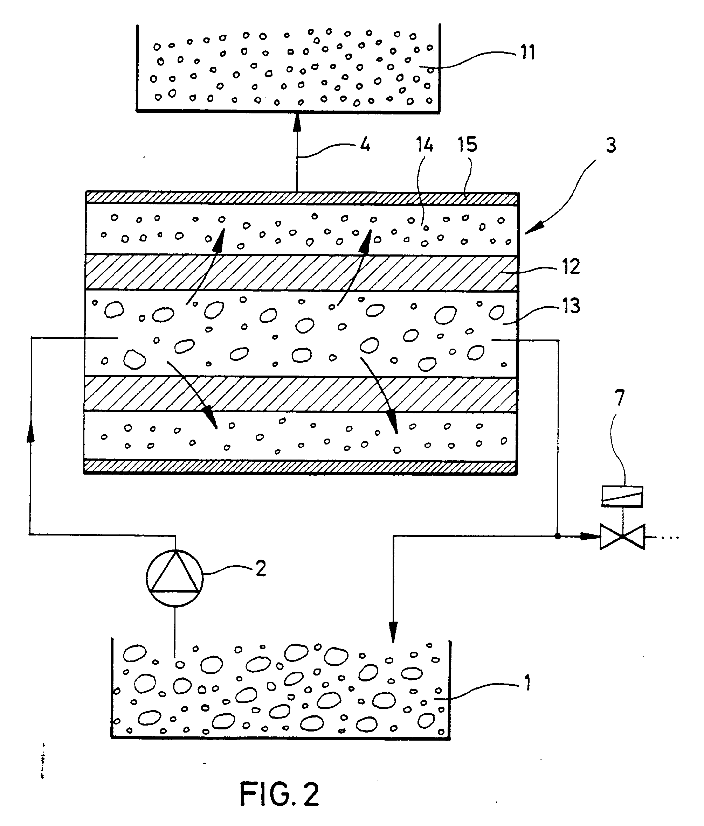

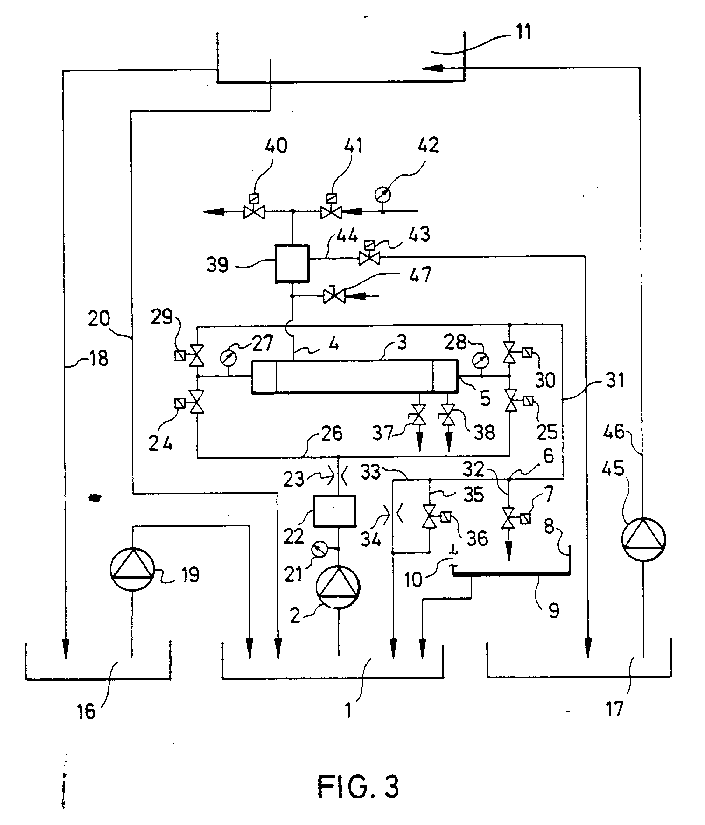

Wie in Fig. 2 zu sehen ist, steht der Membranfilter 3 mit seinem Permeatausgang 4 mit einem Permeatbehälter 17 bwz. Saubertank in Verbindung von welchem aus das Permeat zu einem Arbeitsbehälter 11 der Funkenerosionsmaschine gepumpt wird (vgl. Fig. 3). Der Membranfilter 3 hat bei dieser bevorzugten Ausführungsform eine röhrenförmige Membran 12, die einen Konzentratbereich 13 von einem Bereich des Permeates 14 trennt. Der Membranfilter 3 ist von einer zylindrischen Wand 15 umschlossen.

In der zeichnerischen Darstellung ist ein einziger Membranfilter 3 gezeigt. In einer bevorzugten Ausführungsform sind jedoch eine Vielzahl von identischen Filterelementen 3 strömungsmäßig in Parallelschaltung vorgesehen. Durch diese Ausgestaltung des Membranfilters als Gruppe einer Vielzahl von stabförmigen Filterelementen kann eine hohe Filterfläche bei geringem Raumbedarf erzielt werden.

Vorzugsweise besteht der Filter 3 aus Hohlfasern, die aus Polypropylen bestehen und einen Durchmesser von ungefähr 1,5 mm und eine Porengröße von ungefähr 0,2 um haben.

Eine detaillierte Darstellung der Gesamtanordnung einer praktisch realisierten Vorrichtung zum Aufbereiten der Bearbeitungsflüssigkeit einer Elektroerosionsmaschine ist in Fig. 3 wiedergegeben. Auch in dieser Figur bezeichnen Bezugszeichen, die mit den in den Fig. 1 und 2 verwendeten Bezugszeichen übereinstimmen, identische oder ähnliche Teile.

Die Vorrichtung zum Aufbereiten der Bearbeitungsflüssigkeit umfaßt neben dem Arbeitsbehälter 11 und dem Konzentratbecken 1 einen Auffangbehälter 16 und einen Saubertank 17. Der Inhalt des Arbeitsbehälters 11 kann dem Auffangbehälter 16 über eine Entleerungsleitung 18 zugeführt werden. Mittels einer zweiten Pumpe 19 kann der Inhalt des Auffangbehälters 16 nach Sedimentation des Konzentrates in das Konzentratbecken 1 umgepumpt werden. Ferner steht der Arbeitsbehälter 11 über eine Rückflußleitung 20 direkt mit dem Konzentratbecken 1 in Verbindung. Hinter der ersten Pumpe 2 liegt ein Druckmesser 21, ein Grobfilter 22 sowie eine Blende 23, hinter der sich eine Zuflußleitung 26 teilt und zu zwei Eingangsventilen 24, 25 läuft. Das erste Eingangsventil 24 ist mit dem Membranfilter 3 auf einer Seite verbunden, während das andere Eingangsventil 25 mit dem Membranfilter 3 auf der anderen Seite verbunden ist. Der jeweilige Druck vor bzw. hinter dem Membranfilter 3 wird durch einen zweiten und dritten Druckmesser 27, 28 überwacht. Ferner sind an den Konzentratbereich 13 des Membranfilters 3 neben den Eingangsventilen 24, 25 Ausgangsventile 29, 30 angeschlossen, die über eine Konzentratrückführleitung 31 mit dem Konzentratbecken 1 in Verbindung stehen. Die Konzentratrückführleitung 31 teilt sich an dem Teilstromventil 7 in eine Entsorgungsbehälterleitung 32, in eine eine Blende 34 aufweisende Blendenleitung 33, die im Konzentratbecken 1 mündet, und in eine Druckentlastungsleitung 35, die ein schmutzseitiges Druckentlastungsventil 36 aufweist und sich gleichfalls zum Konzentratbecken 1 hin erstreckt.

Die Eingangsventile 24, 25 und die Ausgangsventile 29, 30 werden derart angesteuert, daß bei Öffnung des Eingangsventiles 24 das weitere Eingangsventil 25 geschlossen ist, während das Ausgangsventil 30 geöffnet ist und das dem ersten Eingangsventil 24 zugewandte Ausgangsventil 29 geschlossen ist. Durch diese Ventilöffnungs- und Schließ-Kombination wird eine Strömungsrichtung festgelegt, die in der bildlichen Darstellung gemäß Fig. 3 von links nach rechts verläuft. Eine Umkehr der Strömungsrichtung durch das Membranfilter kann herbeigeführt werden, indem das Eingangsventile 25 und das Ausgangsventil 29 geöffnet werden, während das Eingangsventil 24 und das Ausgangsventil 30 geschlossen werden.

Durch die Strömungsrichtungsumkehr erzielt man eine Reinigung des Membranfilters, was gleichzeitig zu einer Anhäufung von Schmutzpartikeln im Schmutzkreislauf führt. In solchen Phasen erhöhter Schmutzkonzentration im Schmutzkreislauf ist es zweckmäßig, den gesamten Strom des Schmutzkreislaufes oder zumindest einen größeren Teilstrom über das Vliesfilter (9) zu leiten.

Der Membranfilter 3 weist ferner zwei Entleerungsventile 37, 38 auf.

Der Membranfilter 3 ist mit seinem Permeatausgang 4 an einen Pufferbehälter 39 für das Rückspülen des Membranfilters 3 angeschlossen. Der Pufferbehälter 39 ist über ein Entlüftungsventil 40 entlüftbar und kann zum Zwecke der Abreinigung des Membranfilters 3 durch ein Druckluftventil 41 mit einer Druckluft beaufschlagt werden, deren Druck durch einen vierten Druckmesser 42 überwacht werden kann.

Auch durch dieses Rückspülen erhält man eine Reinigung des Membranfilters 3 und damit eine erhöhte Schmutzkonzentration im Schmutzkreislauf. Auch im Anschluß an solche Rückspülphasen ist es günstig, den Konzentratstrom ganz oder zu wesentlichen Teilen über das Vliesfilter (9) laufen zu lassen.

Der Pufferbehälter 39 steht über eine Rückflußleitung 44, die ein Rückflußventil 43 aufweist, mit dem Saubertank 17 in Verbindung. Das im Saubertank 17 akkumulierte Permeat wird über eine dritte Pumpe 45 mittels einer Permeatleitung 46 in den Arbeitsbehälter 11 rückgeführt. Diese Rückführung des Permeates in den Arbeitsbehälter geschieht vorzugsweise mit einer Förderleistung von ungefähr 50 bis 60 l pro min.

**Patentansprüche**

1. Vorrichtung zum Aufbereiten der Bearbeitungsflüssigkeit einer Elektroerosionsmaschine, mit einem Membranfilter (3), durch den eine zu reinigende Bearbeitungsflüssigkeit als Konzentratstrom im wesentlichen parallel zur Membran zu führen ist, wobei der Konzentratstrom von einem Konzentratbecken zuführbar ist, dadurch gekennzeichnet, daß ein Entsorgungsbehälter (8) mit einem Vliesfilter (9) vorgesehen ist, dem wenigstens ein Teilstrom des aus dem Membranfilter (3) strömenden Konzentratstromes zuführbar ist und von dem der durch das Vliesfilter (9) aufbereitete Teilstrom zu dem Konzentratbekken (1) rückführbar ist.

2. Vorrichtung nach Anspruch 1, dadurch gekennzeichnet, daß das Vliesfilter als Vliesfiltersack (9) oder Vliesfiltermatte ausgebildet ist.

3. Vorrichtung nach Anspruch 1 oder 2, dadurch gekennzeichnet, daß der Entsorgungsbehälter (8) oberhalb des Konzentratbeckens (1) angeordnet ist, und daß das Konzentrat nach Durchsickern des Filterkuchens und des Vliesfilters (9) in das Konzentratbecken zurückführbar ist.

4. Vorrichtung nach Anspruch 3, dadurch gekennzeichnet, daß der Entsorgungsbehälter (8) einen Überlauf (10) aufweist, der zu dem Konzentratbecken führt.

5. Vorrichtung nach einem der Ansprüche 1 bis 4, dadurch gekennzeichnet, daß in einer zum Entsorgungsbehälter (8) führenden Entsorgungsbehälterleitung (32) ein steuerbares Magnetventil (7) vorgesehen ist.

6. Vorrichtung nach einem der Ansprüche 1 bis 5, dadurch gekennzeichnet, daß der Entsorgungsbehälter (8) ein Gitterkorb ist.

7. Vorrichtung nach Anspruch 5, dadurch gekennzeichnet, daß das Magnetventil (7) während des Rückspülens des Membranfilters (3) und/oder im Anschluß an eine Strömungsumkehr des Konzentratstromes durch das Membranfilter (3) geöffnet ist.

**Claims**

1. Device for the treatment of the machining liquid of an electroerosion machine, having a diaphragm-type filter (3) through which a machining liquid to be cleaned is to be guided substantially parallel to the diaphragm as a flow of concentrate, the flow of concentrate being suppliable from a concentrate vessel, characterized in that a disposal container (8) is provided with a fleece filter (9) to which at least a part flow of the flow of concentrate flowing out of the diaphragm-type filter (3) is suppliable and from which the part flow treated by the fleece filter (9) is returnable to the concentrate vessel (1).

2. Device according to Claim 1, characterized in that the fleece filter is constructed as a fleece filter bag (9) or fleece filter mat.

3. Device according to Claim 1 or 2, characterized in that the disposal container (8) is arranged above the concentrate vessel (1), and in that the concentrate is returnable to the concentrate vessel after seeping through the filter cake and the fleece filter (9).

4. Device according to Claim 3,

characterized in that
the disposal container (8) has an overflow (10) which leads to the concentrate vessel.

5. Device according to one of Claims 1 to 4,
characterized in that
a controllable solenoid valve (7) is provided in a disposal container line (32) leading to the disposal container (8).

6. Device according to one of Claims 1 to 5,
characterized in that
the disposal container (8) is a grid cage.

7. Device according to Claim 5,
characterized in that
the solenoid valve (7) is open during flushing back of the diaphragm-type filter (3) and/or following a flow reversal of the flow of concentrate through the diaphragm-type filter (3).

## Revendications

1. Dispositif de traitement du liquide d'usinage d'une machine d'électro-érosion, avec un filtre à membrane (3), à travers lequel un liquide d'usinage à nettoyer est amené sous forme de courant ou flux de liquide concentré sensiblement parallèlement à la membrane, le courant de liquide concentré pouvant provenir d'un réservoir à liquide concentré,
caractérisé en ce
qu'il comprend un réservoir de nettoyage (8) avec un filtre en matériau non-tissé (9), auquel peut être amené au moins une partie du courant ou flux de liquide concentré provenant du filtre à membrane (3), et d'où la partie du courant traitée par le filtre en matériau non-tissé (9) peut retourner au réservoir (1) à liquide concentré.

2. Dispositif selon la revendication 1,
caractérisé en ce
que le filtre en matériau non-tissé est constitué d'un filtre en matériau non-tissé (9) en forme de sac ou d'un filtre en matériau non-tissé en forme de natte.

3. Dispositif selon la revendication 1 ou 2,
caractérisé en ce
que le réservoir de nettoyage (8) est disposé au dessus du réservoir à liquide concentré (1), et en ce que le liquide concentré après passage à travers le gâteau de filtration et le filtre en matériau non-tissé (9) retourne au réservoir de liquide concentré.

4. Dispositif selon la revendication 3,
caractérisé en ce que
le réservoir de nettoyage (8) présente un trop-plein (10), conduisant au réservoir de liquide concentré (1).

5. Dispositif selon l'une des revendications 1 à 4,
caractérisé en ce
qu'il comprend une vanne magnétique (7) commandable, montée sur une conduite de réservoir de nettoyage (32) conduisant au réservoir de nettoyage (8).

6. Dispositif selon l'une des revendications 1 à 5,
caractérisé en ce
que le réservoir de nettoyage (8) est un panier grillagé.

7. Dispositif selon la revendication 7,
caractérisé en ce
que la vanne magnétique (7) est ouverte pendant le lavage à contre-courant du filtre à membrane (3) et/ou à la fin de la commutation ou inversion de sens de la circulation du liquide concentré dans le filtre à membrane (3).

FIG.1

FIG. 2

FIG. 3